(19)

**Europäisches Patentamt**

**European Patent Office**

**Office européen des brevets**

(11) **EP 4 769 071 A1**

(12) **EUROPEAN PATENT APPLICATION**

(43) Date of publication:
**01.07.2026 Bulletin 2026/27**

(21) Application number: **25215227.7**

(22) Date of filing: **12.11.2025**

(51) International Patent Classification (IPC):
**G06F 1/3206** (2019.01) **G06F 1/3234** (2019.01)

(52) Cooperative Patent Classification (CPC):
**G06F 1/3206; G06F 1/3243**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.12.2024 US 202419002283**

(71) Applicant: **INTEL Corporation
Santa Clara, CA 95054 (US)**

(72) Inventors:
- **MADIGAN, Justin
  Folsom, 95630 (US)**
- **MILLER, John
  Portland, 97217 (US)**
- **CANTZLER, Richard
  Folsom, 95630 (US)**

(74) Representative: **Viering, Jentschura & Partner
mbB
Patent- und Rechtsanwälte
Am Brauhaus 8
01099 Dresden (DE)**

(54) **APPARATUS AND METHOD FOR PREDICTING I/O DEVICE INTERRUPT FREQUENCY**

(57) An apparatus and method for predicting I/O device interrupt frequency. For example, one embodiment of a method comprises: storing metrics related to interrupts associated with an input-output (IO) device coupled to compute circuitry; evaluating the metrics to identify periodic interrupts; generating a time for a predicted next interrupt for each periodic interrupt; and initiate waking the compute circuitry from a low power state prior to the time for the predicted next interrupt to allow the compute circuitry to be in an active state when the predicted next interrupt is received.

FIG. 1

**Description**

**BACKGROUND**

**Field of the Invention**

This invention relates generally to the field of computer processors. More particularly, the invention relates to an apparatus and method for predicting I/O device interrupt frequency.

**Description of the Related Art**

Various I/O devices rely on processor interrupts for data processing. Those I/O devices may have unstated expectations on the timeframe in which their interrupt routine must begin execution on the target processor. If these expectations are not met, an I/O device may not operate correctly. For example, an external display may experience visible flickering, headset audio may crackle or distort, or speech captured by a microphone may sound jittery.

The primary reason these unstated requirements may not be met is power management actions. Modern systems rely on power management techniques that place components into low power states where the components are either inoperable or operate at a reduced capacity or quality of service. To resume from these low power states takes time, and if an I/O device is not prepared to incur the resume latency, errors such as those listed above may occur.

However, strict interrupt processing time requirements most often arise from the need to process data within an unspecified but consistent period. If this period can be determined, the system can pre-wake components from low power states ensuring their availability at the precise moment they are required by an I/O device. This would result in the optimal power and performance profile: components are left in the lowest power state until the moment they are needed.

**BRIEF DESCRIPTION OF THE DRAWINGS**

A better understanding of the present invention can be obtained from the following detailed description in conjunction with the following drawings, in which:

FIG. 1 illustrates an example computer system architecture.

FIG. 2 illustrates a processor comprising a plurality of cores.

FIG. 3A illustrates a plurality of stages of a processing pipeline.

FIG. 3B illustrates details of one embodiment of a core.

FIG. 4 illustrates execution circuitry in accordance with one embodiment.

FIG. 5 illustrates one embodiment of a register architecture.

FIG. 6 illustrates one example of an instruction format.

FIG. 7 illustrates addressing techniques in accordance with one embodiment.

FIG. 8 illustrates one embodiment of an instruction prefix.

FIGS. 9A-D illustrate embodiments of how the R, X, and B fields of the prefix are used.

FIGS. 10A-B illustrate examples of a second instruction prefix.

FIG. 11 illustrates payload bytes of one embodiment of an instruction prefix.

FIG. 12 illustrates instruction conversion and binary translation implementations.

FIGS. 13A-B illustrate example interrupt processing circuitry integrated in a processor.

FIG. 14 illustrates a control register to store an indication of an NMI processing mode;

FIG. 15 illustrates one embodiment of a local vector table in a local APIC;

FIG. 16 illustrates one embodiment of an interrupt command register (ICR);

FIG. 17 illustrates one embodiment of a interrupt remapping table entry;

FIG. 18 illustrates one embodiment of a posted interrupt descriptor; and

FIG. 19 illustrates a method in accordance with one embodiment of the invention.

FIG. 20 illustrates an example SoC on which embodiments of the invention may be implemented.

FIG. 21 illustrates a method in accordance with embodiments of the invention.

FIG. 22 illustrates timing results collected during testing with different sets of parameters.

FIGS. 23A-C illustrate example signaling diagrams associated with waking a compute cluster to process an interrupt.

## DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

## Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

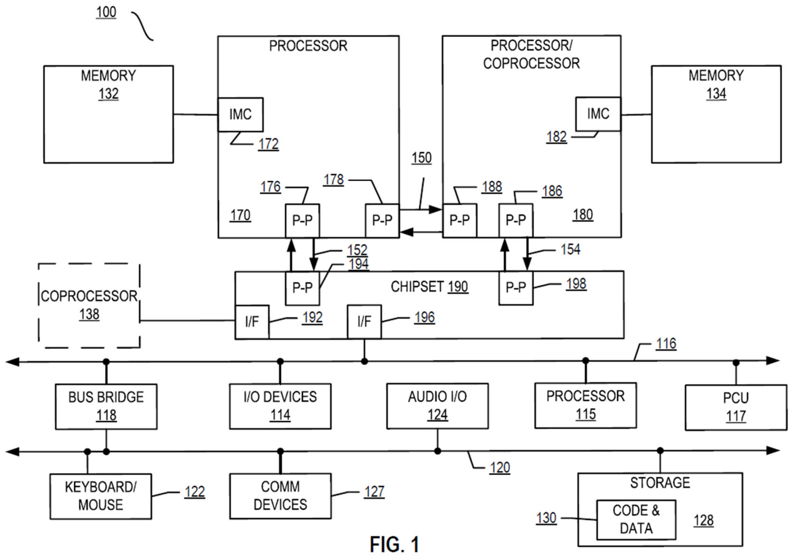

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

## Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

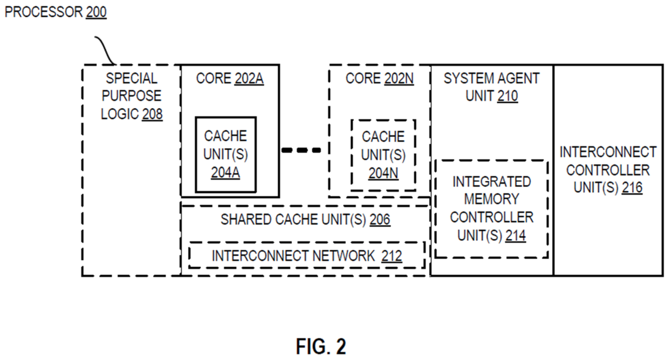

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

**Exemplary Core Architectures**

**In-order and out-of-order core block diagram**

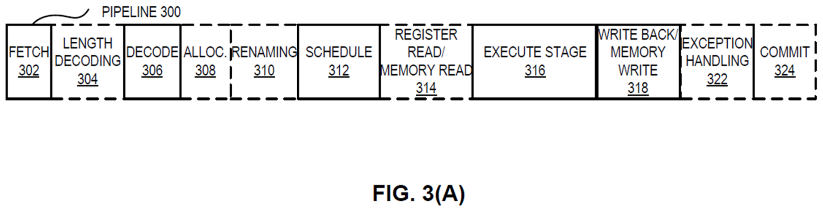

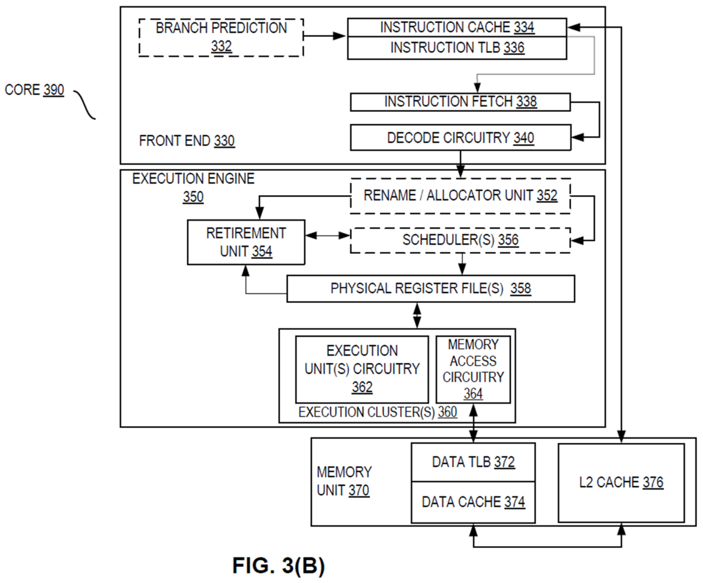

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A),** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

**Exemplary Execution Unit(s) Circuitry**

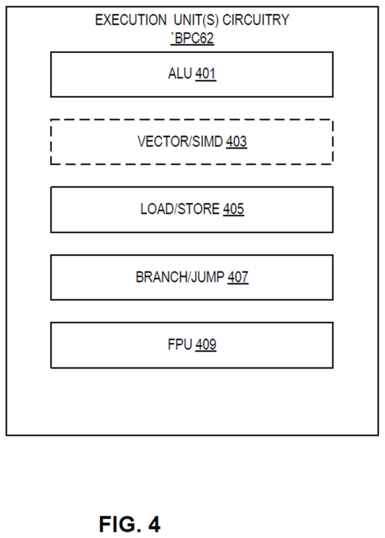

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

**Exemplary Register Architecture**

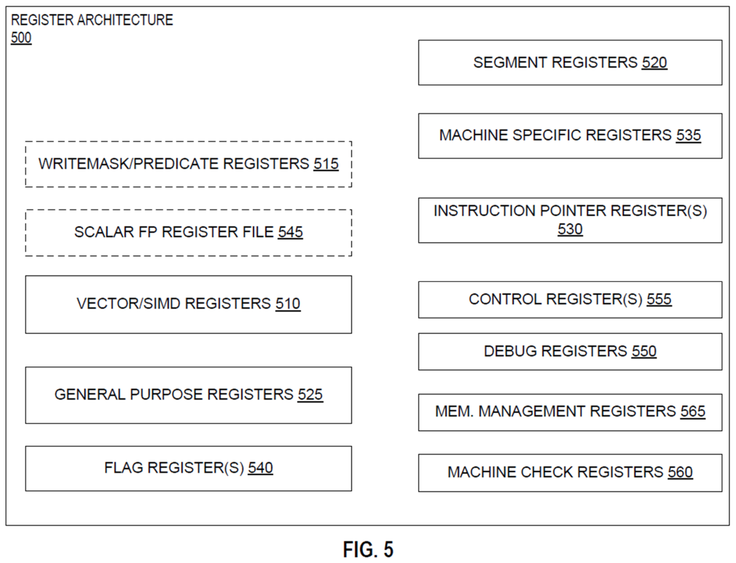

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

**Instruction Sets**

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

**Exemplary Instruction Formats**

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

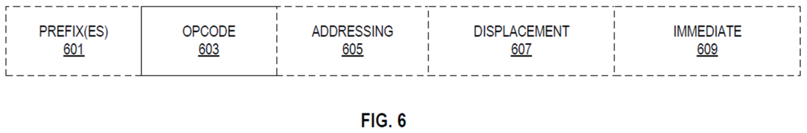

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

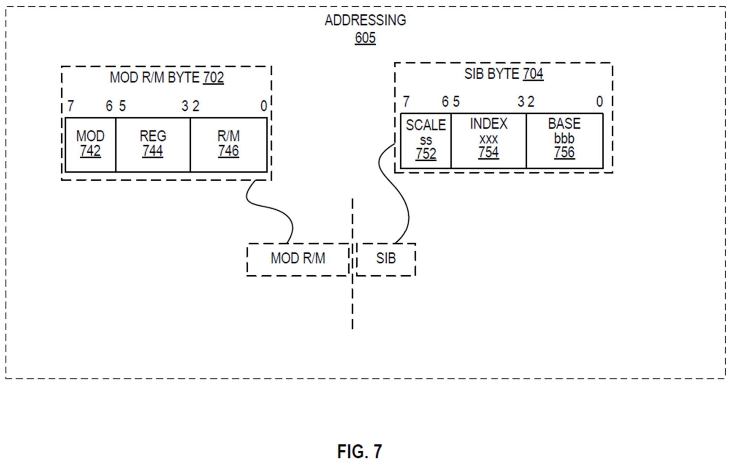

The addressing field 605 is used to address one or more operands of the instruction, such as a location in memory or one or more registers. FIG. 7 illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses $2^{scale}$ * index + base).

Some addressing forms utilize a displacement value to generate a memory address. For example, a memory address may be generated according to $2^{scale}$ * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

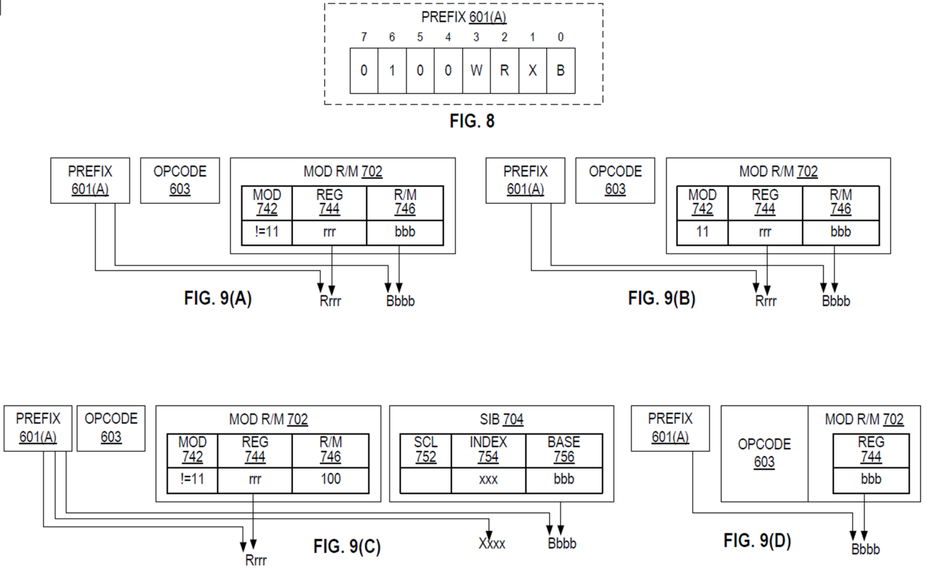

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 ($2^4$) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

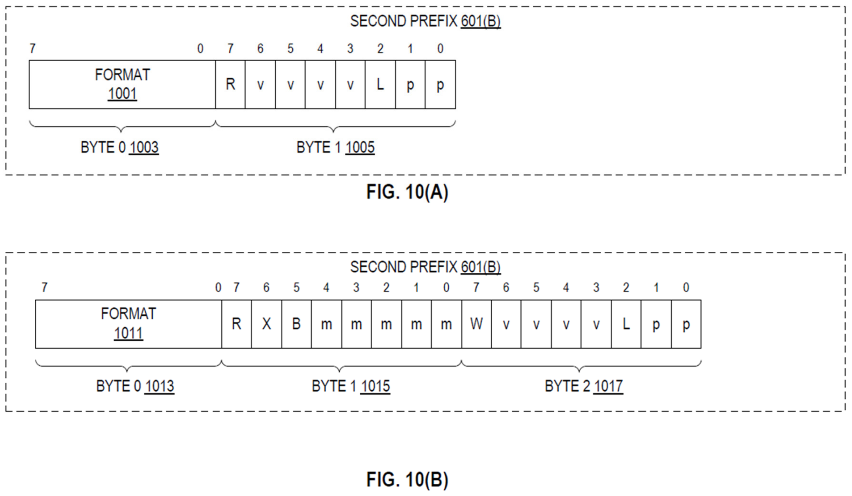

**FIGS. 10(A)-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

FIG. 10(B) illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

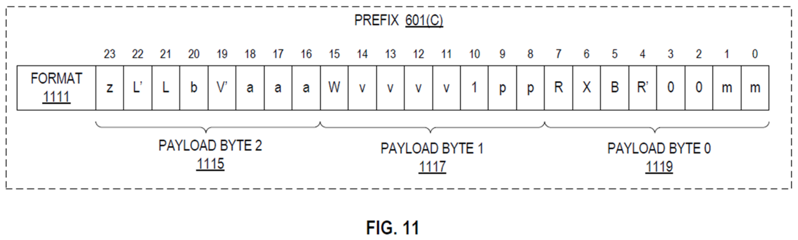

FIG. 11 illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 5) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P [22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1:** 32-Register Support in 64-bit Mode

|  | 4 | 3 | [2:0] | REG. TYPE | COMMON USAGES |
|---|---|---|---|---|---|
| **REG** | R' | R | ModR/M reg | GPR, Vector | Destination or Source |
| **VVVV** | V' | vvvv |  | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2:** Encoding Register Specifiers in 32-bit Mode

|  | [2:0] | REG. TYPE | COMMON USAGES |
|---|---|---|---|
| **REG** | ModR/M reg | GPR, Vector | Destination or Source |
| **VVVV** | vvvv | GPR, Vector | 2nd Source or Destination |
| **RM** | ModR/M R/M | GPR, Vector | 1st Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3:** Opmask Register Specifier Encoding

|  | [2:0] | REG. TYPE | COMMON USAGES |
|---|---|---|---|
| **REG** | ModR/M Reg | k0-k7 | Source |
| **VVVV** | vvvv | k0-k7 | 2nd Source |
| **RM** | ModR/M R/M | k0-7 | 1st Source |
| **{k1}** | aaa | k0[1]-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

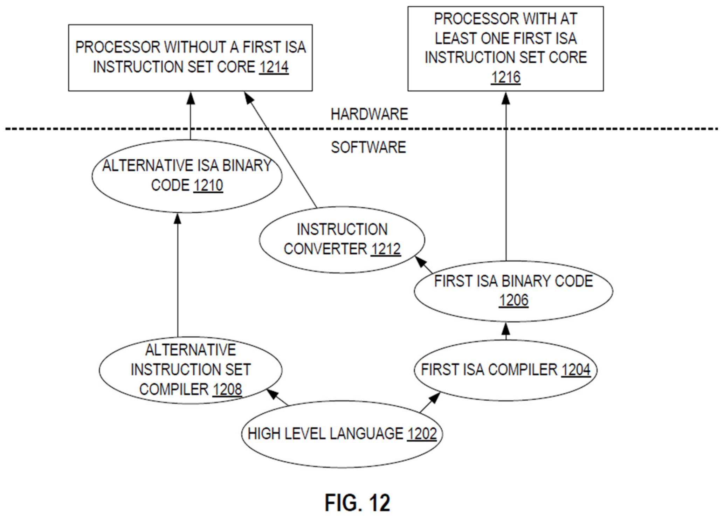

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel® processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

**APPARATUS AND METHOD TO IDENTIFY THE SOURCE OF AN INTERRUPT**

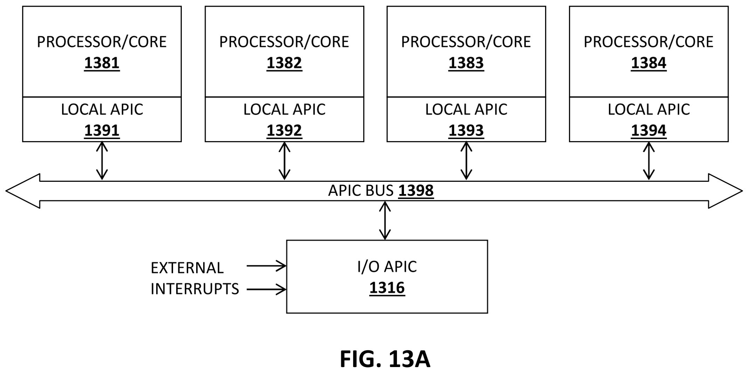

**FIG. 13A** illustrates an example interrupt delivery architecture in a multi-processor system, configured in accordance with the Advanced Programmable Interrupt Controller (APIC) standard. Each of a plurality of processors and/or cores 1201-1204 include local APIC circuitry 1211-1214, respectively, for transmitting, receiving, and processing interrupt messages. An APIC bus 1220 carries inter-processor interrupts (IPIs) between processors/cores and external interrupts received from other system components via I/O APIC circuitry 1215.

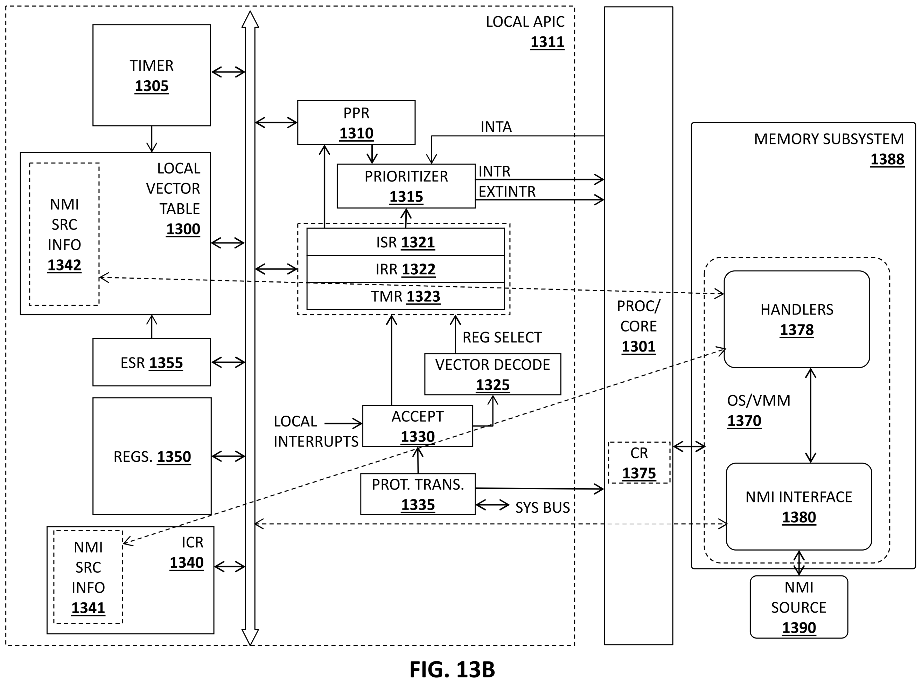

**FIG. 13B** illustrates additional details of one embodiment of a local APIC 1211. While various specific details are illustrated in **FIG. 13B,** it should be noted that the underlying principles of the invention are not necessarily limited to these specific details. A local vector table (LVT) 1200 includes a set of 32-bit APIC registers, one for each local interrupt to allow software to specify the manner in which the local interrupts are delivered to the corresponding processor cores. One embodiment of the local vector table 1200 includes performance monitoring counters, a timer register, local interrupt registers, thermal sensor interrupt registers and error registers. As discussed below, the LVT 1300 is one of the locations where the NMI source information 1342 may be stored.

Timer circuitry 1305 includes another set of registers including counter registers to implement monitoring/timing associated with the various forms of interrupts. Errors detected during interrupt processing are initially stored in an error status register 1355 and moved to an the local vector table 1300.

The local APIC 1311 queues the fixed interrupts that it accepts in one of two interrupt pending registers: the interrupt request register (IRR) 1322 or in-service register (ISR) 1321. In one embodiment, these are 256-bit read-only registers where each bit represents one of 256 possible vectors. Vectors 0 through 15 are reserved by the APIC. When a local interrupt is sent to the processor/core 1301, acceptance logic 1330 determines whether to accept the interrupt in accordance with an acceptance protocol. If the interrupt is accepted, it is logged into the interrupt request register (IRR) 1322. A prioritizer 1315 transmits the interrupt to the processor core according to the interrupt priority and the the current processor priority stored in the processor priority register (PPR) 1310.

The trigger mode register (TMR) 1323 indicates the trigger mode of the interrupt. Upon acceptance of an interrupt into the IRR 1322, the corresponding TMR bit is cleared for edge-triggered interrupts and set for level triggered interrupts. If a TMR bit is set when a cycle for its corresponding interrupt vector is generated, an EOI message is sent to all I/O APICs. Protocol translation circuitry/logic 1335 couples the local APIC to the system bus and performs translation functions.

In one implementation, the interrupt command register (ICR) 1340 is a 64-bit local APIC register that allows software running on the processor/core 1301 to specify and send inter-processor interrupts (IPIs) to other processors in the system. To send an IPI, the ICR is configured to indicate the type of IPI message to be sent and the destination processor(s)/core(s). All fields of the ICR are read-write by software with the exception of the delivery status field, which is read-only. The act of writing to the low doubleword of the ICR causes the IPI to be sent.

As illustrated in **FIG. 13B,** an operating system (OS) and/or virtual machine monitor VMM 1370 (or other privileged software component) reads and/or writes the various local APIC 1311 registers. In operation, all interrupt destinations provide a vector for normal interrupts which is delivered to the local APIC circuitry 1311 and then to an OS-managed handler 1378. Note that the handlers 1378 component illustrated in **FIG. 13B** may represent the plurality of different handler types described herein including the NMI handler.

Non-maskable interrupts (NMIs) are delivered via a fixed Vector #2 and the interrupt vector field of the source is not programmed in current implementations. One embodiment of the invention uses this field to specify the interrupt source information. In one particular implementation, the interrupt source information is specified in a mask of 16 bits, where each bit is associated with a specific NMI source. In one implementation, an NMI interface 1380 processes the various new NMI functions described below and updates the local APIC 1311 to identify NMI sources 1390. For example, in **FIG. 13B,** the Interrupt Command Register 1340 and/or local vector table 1300 are updated with NMI source information 1341-1342, respectively. In this implementation, the NMI source information 1341-1342 may be encoded in the interrupt vector field, although the underlying principles of the invention are not necessarily limited to this implementation.

By way of example, and not limitation, bits 8-10 in the Interrupt Command Register (ICR) 1340 indicate the delivery mode for sending IPIs. The Vector field (bits 0-7) is currently ignored for NMIs and system management interrupts (SMIs). In one embodiment of the invention, the NMI interface 1380 writes to this Vector field even when the delivery mode is NMI. On receiving an interrupt, the local APIC 1311 converts this Vector to a bit field such as the 16-bit mask and stores the bit field as the NMI source information 1341-1342 in the ICR 1340, LVT 1300, and/or other local APIC registers.

One embodiment of the processors/cores 1301-1304 support a fast return and event delivery (FRED) implementation which significantly improves performance of the interrupt/exception delivery architecture for modern 64 bit operating systems. In particular, this embodiment replaces delivery through the interrupt descriptor table (IDT), thereby removing the memory accesses and descriptor table loads needed to locate the code, stack segments selectors, and pointers for the event handlers 1378. In addition, deprecation of event/exception delivery for protection rings 1 and 2 reduces latency as the event delivery microcode and/or circuitry does not need to consider these paths. Finally, one embodiment provides separate instructions for returning to the user space and returning to the supervisor space, for an optimal microcode implementation with low latency

In an implementation where FRED is available, the OS 1370 can receive the NMI source 1390 data (e.g., the Vector) via an error code. For other implementations, hardware/microcode stores the NMI source 1390 in a control register such as an MSR (Model Specific Register). This mechanism allows an NMI interface 1380 to obtain the source of the NMI via the error code, and then call the appropriate handler 1378.

The CPUID operation is used to identify whether the processor supports a particular feature. One embodiment of the invention relies on of the reserved fields of CPUID which is not currently allocated. In one particular implementation, CPUID.7.EDX[16] = 1 indicates that this processor supports the non-maskable interrupt processing techniques described herein.

Some implementations also support virtualized interrupt processing in which interrupt tables and all or a portion of the local APIC 1311 are virtualized in a designated address region within the memory subsystem 1388. In these embodiments, different regions of the memory subsystem 1388 may be associated with different virtual machines (VMs).

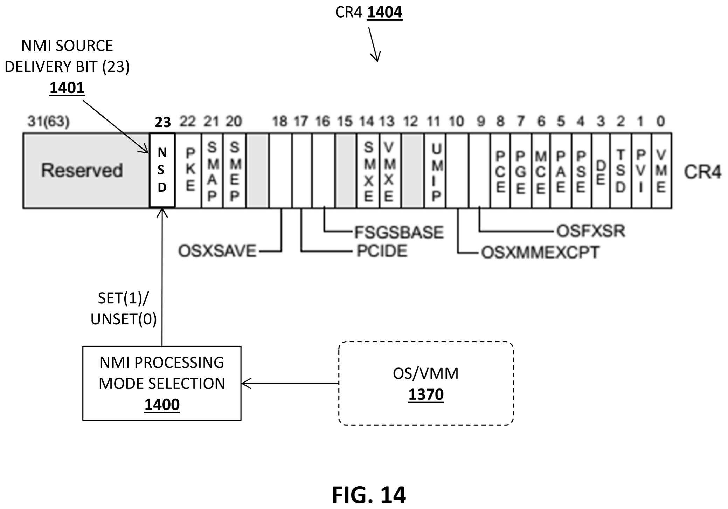

In one embodiment, the operating system (OS) 1370 and/or virtual machine monitor (VMM) 1370 (or other privileged software) opts in to NMI source delivery by setting a bit in a control register (CR) 1375. For example, in one implementation, the OS/VMM 1370 generates a request to the processor 1301 to choose NMI source delivery on interrupt notification. **FIG. 14** illustrates a embodiment in which a bit 23 1401 is set in register CR4. However, the particular control register and bit is not pertinent to the underlying principles of the invention.

In one embodiment, every potential NMI source 1390 informs the OS/VMM 1370 via NMI interface 1380 which will be called when an NMI is signaled. In one embodiment, this is accomplished via a registration operation directed to the NMI interface 1380 such as:

int register_nmi_handler(type, nmi_handler_fn, private_data);

This function is one example of an interface for callers to register an NMI handler. The "type" variable indicates the type of source that generates the NMI. By way of example, and not limitation, the "type" variable may indicate a local NMI (LOCAL_NMI), an IO NMI (IO_NMI), or a performance NMI (PERF_NMI).

One embodiment of the invention identifies the NMI source 1390 more precisely with a unique NMI source identifier. For example, the following function may be offered by the NMI interface 1380:

int register_nmi_handler(type, int *nmi_source, nmi_handler_fn, private_data);

Here, "*nmi_source" uniquely identifies the NMI source. This identifier may be generated by the interface which programs the NMI source 1390. For instance, when an NMI_IPI is generated, the Interrupt Command Register (ICR) may be used to store the NMI source ID 1341.

Programming NMI Source Identifier

As mentioned, NMI source information may stored/managed in various locations. For example, NMI source information 1341-1342 may be programmed in mask fields within the ICR 1340 and/or the local vector table 1300, respectively. In one embodiment, the value of the vector field encoding the NMI source is 8 bits, which is then translated to a 16-bit bit mask (e.g., in which each bit is associated with a different source). When processing an NMI, the OS/VMM 1370, handlers 1378, and/or NMI interface 1380 can read the bit mask to identify the NMI source.

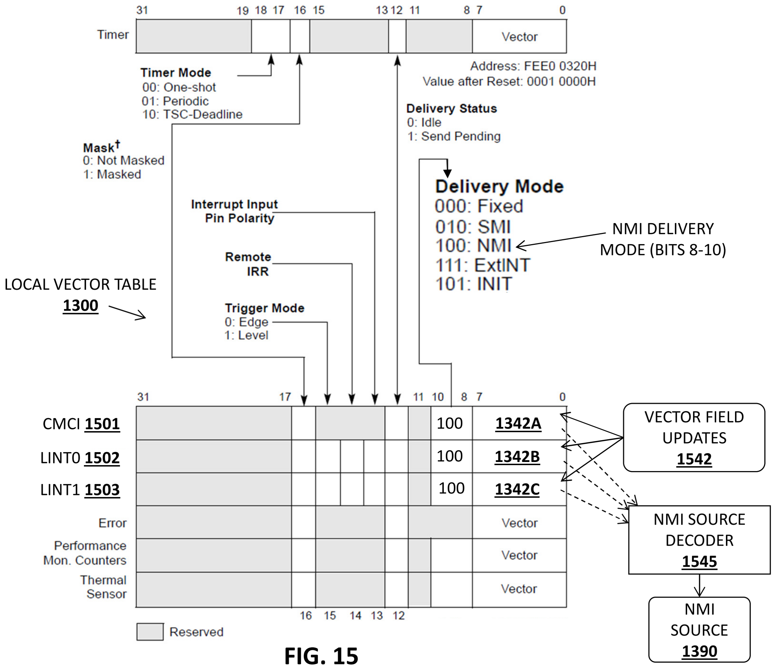

**FIG. 15** illustrates an embodiment of the local vector table 1300 comprising a plurality of 32-bit entries. As indicated in the figure, bits 8:10 indicate the delivery mode, which is coded as "100" for an non-maskable interrupts. As shown, the Vector field bits 0:7, previously ignored for NMIs, are used to store NMI source information 1342A-C for certain entries associated with NMIs. In one embodiment, vector field updater circuitry and/or logic 1542 updates the vector fields with the NMI source information 1342A-C. When an NMI is triggered, an NMI source decoder 1545 reads the NMI source information 1342A-C from the relevant entry in the local vector table 1300 to precisely identify the source of the NMI 1390.

The vector field updater 1542 and NMI source decoder 1545 may be implemented in circuitry, program code, or any combination thereof. For example, in one embodiment, the vector field updater 1542 and NMI source decoder 1545 are implemented by execution circuitry of a processor/core 1301 executing different instruction sequences. In another implementation, the vector field updater 1542 and NMI source decoder 1545 include fixed function circuitry to perform the operations described herein. In one particular implementation, one or both of the vector field updater 1542 and NMI source decoder 1545 are integrated within one or more of the handlers 1378 described herein.

In one embodiment, the vector field may be updated with NMI source information for any of the local vector table entries. The three entries highlighted in **FIG. 15** are the CMCI Register (FEE0 02F0H) which specifies interrupt delivery when an overflow condition of corrected machine check error count reaches a threshold value occurrs in a machine check bank; and the LINT1 and LINT0 Registers which specifies interrupt delivery when an interrupt is signaled at the LINT1 and LINT0 pins, respectively. Note, however, that the underlying principles of the invention may be implemented with other types of registers and entries.

Specifying NMI Source for Inter Processor Interrupt (IPI)

As mentioned, the interrupt command register (ICR) 1340 is the primary local APIC facility for issuing inter-processor interrupts. One embodiment of the ICR 1340 is a 64-bit local register that allows software executed on the processor/core 1301 to specify and send interrupts to other processors in the system. To send an IPI, the processor sets up the ICR 1340 to indicate the type of IPI message to be sent and the destination processor/core or processors/cores. The act of writing to the low doubleword of the ICR 1340 causes the IPI to be sent.

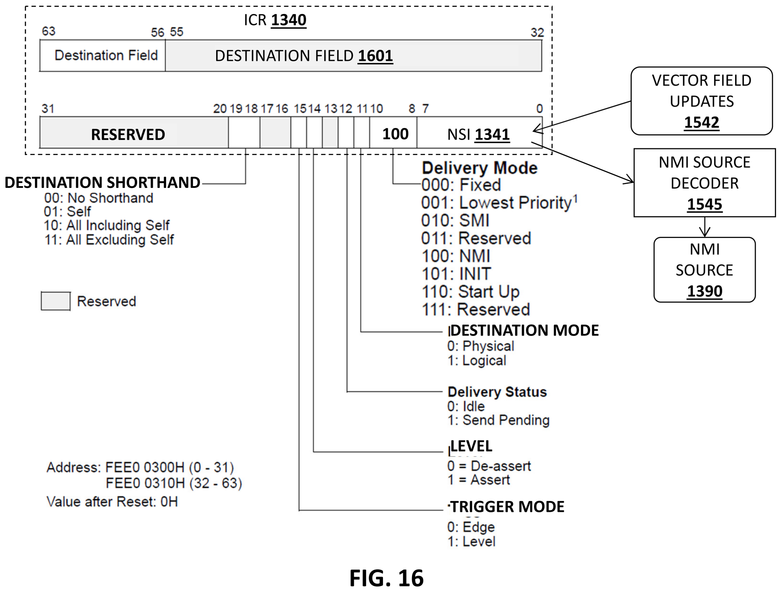

**FIG. 16** illustrates one embodiment of a format used in the ICR 1340 for sending non-maskable inter-processor interrupts (IPIs) to signal other logical processors (identified by destination field 1601) to perform special service functions, such as TLB shootdown operations (e.g., invalidating TLB entries for a specified address or address range). For example, if a logical processor on processor/core 1301 updates virtual-to-physical address mappings for a memory region which is shared by a second logical processor on processor/core 1304, it can send an IPI to processor/core 1304 as a non-maskable interrupt to trigger a TLB shootdown for any mappings corresponding to that memory region.

In the illustrated example, the Vector field of bits 0:7, which are normally ignored for NMIs, is updated with NMI source information 1341. In addition, to identify an NMI, the delivery mode specified in bits 8-10 is set to "100" for an NMI. As described with respect to the LVT 1300, in one embodiment, vector field update circuitry and/or logic 1542 updates the vector fields with the NMI source information 1342A-C. An NMI source decoder 1545 may then read the NMI source information 1342A-C from the ICR 1340 to precisely identify the source of the NMI 1390 (e.g., a processor/core for IPIs).

In some implementations, an input-output memory management unit (IOMMU) is used to map regions of system memory to devices other than the processor (e.g., I/O devices, graphics processors, DSPs, etc). The IOMMU must also translate interrupts between different domains such as IO domains and processor/core domains. In **FIG. 13A,** for example, the I/O APIC may be a component within an IOMMU for remapping interrupts between domains.

Interrupt-remapping hardware within the IOMMU includes a memory-resident single-level table, called the Interrupt Remapping Table (IRT). The IRT has a base address and size specified through the Interrupt Remap Table Address Register. Each entry in the table is 128-bits in size and is referred to as Interrupt Remapping Table Entry (IRTE).

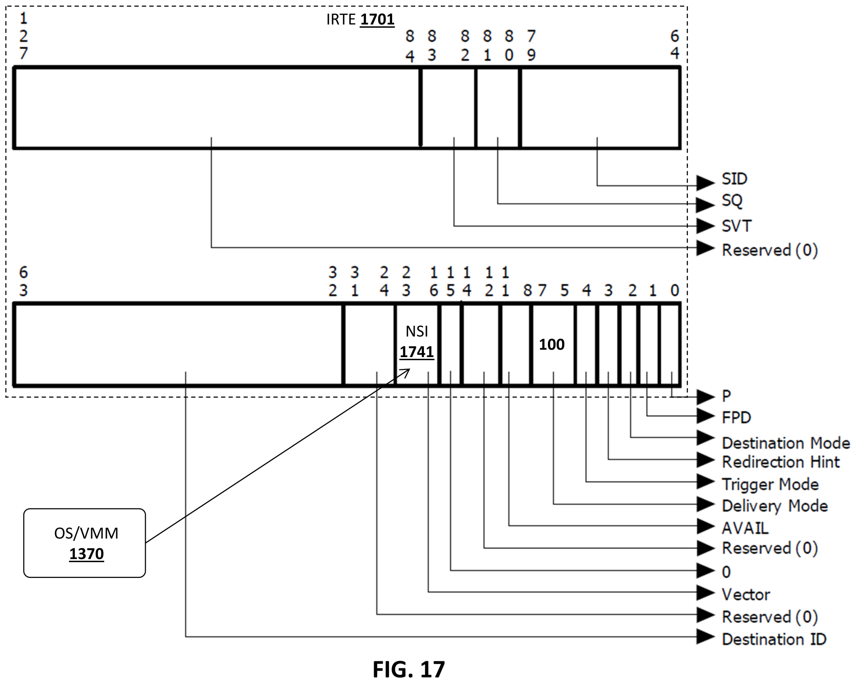

**FIG. 17** illustrates an IRTE 1701 in accordance with one embodiment of the invention. In particular, the delivery mode is specified by bits 5:7 and is updated to indicate non-maskable interrupt delivery (e.g., using the 3-bit 100 code as previously described). In addition, in one embodiment, bits 16:23 comprising the vector field are updated to indicate non-maskable interrupt source information 1741. When the OS/VMM 1370 is programming entries in the IRTE 1701 it provides the NMI source information 1741 which, in one embodiment, is reserved via the register_nmi_handler() function.

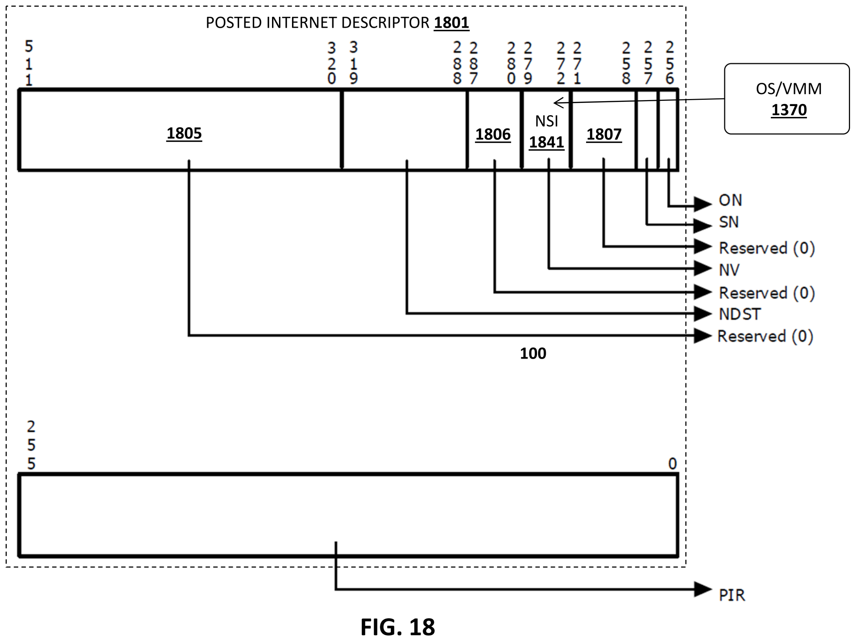

As illustrated in **FIG. 18,** in one implementation, similar updates are made to the Posted Interrupt Descriptors 1801. Typically posted interrupt descriptors are not used for NMI notifications since they are only targets for virtual machines. However, the native OS/VMM 1370 can still use posted internet descriptors 1801 in a manner that they can post process.

In this implementation, the delivery mode is specified in one or more of the reserved fields 1805-1807 of the posted interrupt descriptor format 1801. The NMI source information 1841 may be stored in bits 272:279 as illustrated.

Providing NMI Source on Interrupt Delivery

Regardless of the specified set of registers used, the NMI source information (e.g., 1341) programmed in the vector field is gathered by the local APIC 1311 and delivered using NMI delivery to an OS/VMM handler 1378. In one embodiment, when using Fast Return and Event Delivery (FRED), a 64-bit error code is pushed on the stack, out of which a subset of bits (e.g., 16-bits, 32-bits, etc) are valid. As mentioned, these bits identify which error source signaled the NMI. If bit 0 is set, this indicates one of the legacy sources generated the NMI, and hence the OS/VMM 1370 needs to call all the legacy sources to determine which (if any) generated the interrupt. Otherwise it will be considered a Spurious NMI and the OS/VMM 1370 will take a default action specified by the administrator.

In one embodiment, the delivery is arranged by exposing a specific MSR that the NMI handler 1378 reads to determine the NMI sources 1390 (e.g., via a read MSR (rdmsr()) instruction). In order to avoid any races which might occur if the bits were set via NMI delivery and the OS/VMM 1370 ensuring it handled the event, one embodiment of the OS/VMM 1370 clears the sources reported by the MSR by writing a 1 to those sources. The interrupt handler 1378 first reads the MSR, and then clears the sources it has taken note of and then writes the same value back. It then proceeds to call the appropriate interrupt handlers. The following code sequence is illustrative of one particular implementation:

```
nmi_sources = sources = rdmsr(MSR_NMI_SOURCE);

while (sources) {

    val = find_first_bit(sources);

    call_nmi_callback(val); // Call the appropriate handler

    sources &= ~(1<<val);

}

// Now clear the MSR so new sources can be processed.

wrmsr(NMI_MSR_SOURCE, nmi_sources);
```

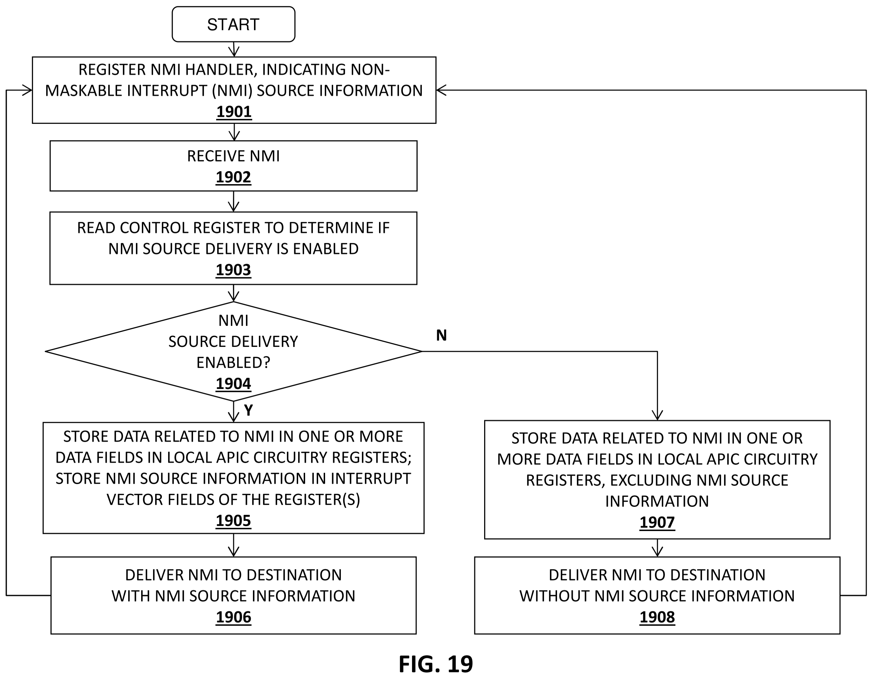

A method in accordance with one embodiment of the invention is illustrated in **FIG. 19.** The method may be implemented within the context of the architectures described above, but is not limited to any particular processor or system architecture.

At 1901, an NMI source registers an NMI handler with an OS or VMM indicating NMI source information. As mentioned, in one embodiment, the NMI source information is provided in an error code. At 1902, a non-maskable interrupt (NMI) is received and, at 1903, a control register of the processor receiving the NMI is read to determine whether NMI source delivery is enabled.

If NMI source delivery is not enabled, determined at 1904, then at 1907 data related to the NMI is stored in one or more data fields in local APIC circuitry registers, excluding the NMI source information. At 1908, the NMI is delivered to its destination without NMI source information.

If NMI source delivery is enabled, determined at 1904, then at 1905 data related to the NMI is stored in one or more data fields in local APIC circuitry registers including NMI source information, which is stored in an interrupt vector field of the register(s). At 1906, the NMI is delivered to its destination with the NMI source information.

## APPARATUS AND METHOD FOR PREDICTING I/O DEVICE INTERRUPT FREQUENCY

The embodiments of this disclosure employ operations (e.g., heuristics) to identify unstated, periodic requirements for various system components so they can be preemptively awakened from low power states (e.g., prior to the end of the period). Frequency and duration information related to the execution time of I/O interrupt vectors are tracked and subsequently used to predict the next interrupt time of a given vector. The associated system hardware resources are awakened for the processing of the interrupt vector.

Input-output (IO) devices may rely on processor interrupts for data processing and may have unstated expectations on the timeframe in which their interrupt routine must begin execution on the target processor. If these expectations are not met, an I/O device may not operate correctly. For example, an external display may experience visible flickering, headset audio may crackle or distort, or speech captured by a microphone may sound jittery.

The primary reason these unstated requirements may not be met is power management actions. Modern systems rely on power management techniques that place components into low power states where the components are either inoperable or operate at a reduced capacity or quality of service. To resume from these low power states takes time, and if an I/O device is not prepared to incur the resume latency, the I/O device may not operate correctly.

Strict interrupt processing time requirements most often arise from the need to process data within an unspecified but consistent period. If this period can be determined, the system can pre-wake components from low power states ensuring their availability at the precise moment they are required by an I/O device. This would result in a power and performance profile in which components are left in the lowest power state until the moment they are needed.

Embodiments of the invention accurately predict the next time each interrupt vector will trigger by evaluating the observed period of each interrupt triggering over time. To ensure only periodic interrupts are predicted, a confidence value is generated for each prediction to ensure there is sufficient confidence in the prediction before it is acted upon.

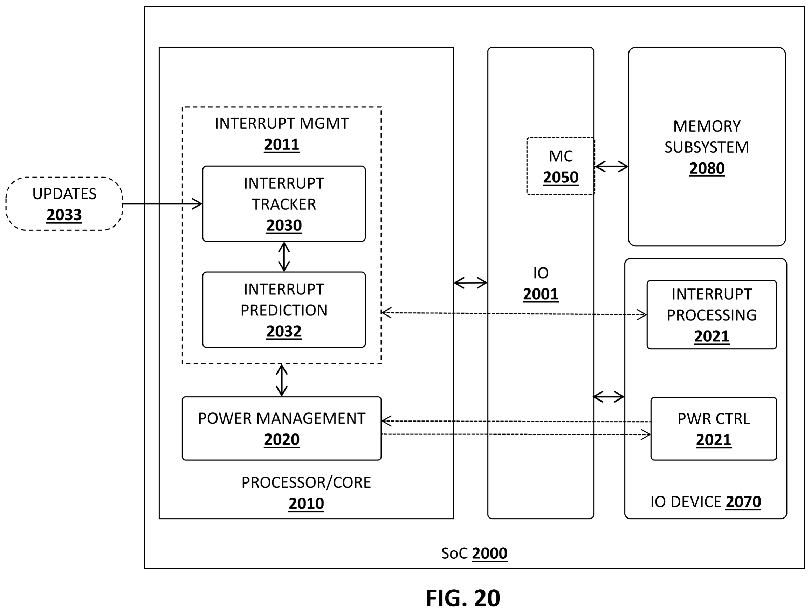

**FIG. 20** illustrates an example SoC 2000 comprising a processor or core 2010 with interrupt management circuitry 2011 for processing interrupts as described herein and power management circuitry 2020 for managing power consumption and performance of the processor/core 2010, including managing the active states and low power states of the processor or core 2010. The processor/core 2010 is coupled to one or more I/O devices, such as I/O device 2070 via input/output circuitry 2001, which may be integrated on the same chip or die as the processor/core 2010, or which may be integrated on a separate chip or die on the same package as processor/core 2010. The power management circuitry 2020 is communicatively coupled to a power controller 2021 of the I/O device 2070 to allow the I/O device 2070 to enter into and exit from its own low power states. The I/O device 2070 also includes interrupt processing logic 2021 for generating and receiving interrupts when not in a low power state.

In some embodiments, the IO circuitry 2001 includes a memory controller 2050 to couple the processor/core 2010 to a memory subsystem 2080 (e.g., a system memory and last level cache). The processor/core 2010 may comprise one of a plurality of processors/cores or other circuit blocks. The interrupt management circuitry 2011 may comprise an Advanced Programmable Interrupt Controller (APIC), such as those described above.

In the illustrated embodiment, the interrupt management circuitry 2011 includes an interrupt tracker 2030 for tracking metrics associated with periodic interrupts corresponding to I/O device 2070 as described herein. For example, the interrupt tracker 2030 may store the following information (or portions thereof) for each Interrupt vector:

- *Most Recent Interrupt (MRI):* Always-running timer (ART) timestamp of the most recent interrupt trigger.
- *Predicted Next Interrupt (PNI):* A prediction of when the next interrupt will fire, expressed as an offset from the current time.
- *Moving Average Window (MAW):* Over how many samples to gather a moving average of interrupt times.
- *Average Error in Window (AEW):* The computed error between predicted and actual interrupt timings within the current window.
- *Average Error Threshold (AET):* The error threshold below which the predictive wake is enabled.

In some embodiments, the interrupt tracker comprises a table or similar data structure with entries, where each entry is associated with a different interrupt vector.

Interrupt prediction logic 2032 uses the information in the interrupt tracker 2030 to predict the next time each interrupt vector will trigger by evaluating the observed period of each interrupt triggering over time. To ensure only periodic interrupts are predicted, a confidence value is generated for each prediction to ensure there is sufficient confidence in the prediction before it is acted upon. In some embodiments, the interrupt prediction logic 2032 generates the predicted next interrupt (PNI) value, storing it in the corresponding entry in the interrupt tracker 2030. Before the time the next interrupt is expected to be triggered, power management circuitry 2020 wakes the corresponding processor/core 2010 so that it will be available to efficiently process the interrupt.

In operation, each time the interrupt vector is triggered, the interrupt prediction logic 2032 adjusts its prediction by the time between the current and previous interrupts. In particular, the corresponding predicted next interrupt (PNI) value may be adjusted proportionally to the time between the current and previous interrupts. This may be calculated, for example, by first subtracting the current timestamp from the Most Recent Interrupt, referred to as Time Between Interrupts (TBI). If the PNI is uninitialized, the TBI is stored as the PNI. Otherwise, the PNI is determined as follows:

$$(PNI - PNI/MAW) + TBI/MAW$$

The error is calculated by subtracting the actual time of the interrupt from the predicted time of the interrupt. A moving average of the error is stored and updated.

The Average Error in Window (AEW) is the error within the moving average window and may be determined as follows. If the PNI is uninitialized, do nothing. Otherwise, if the AEW is uninitialized, store the difference between the PNI and TBI as the AEW. Otherwise, recalculate the AEW as follows:

$$(AEW - AEW/MAW) + (PNI - TBI)/MAW$$

The combination of these elements enables a simple heuristic machine to generate wake predictions for waking the I/O device 2070. In some embodiments, if the AEW value is above a threshold, then the interrupt is no longer considered a periodic interrupt and predictive waking is no longer performed.

In some embodiments, the above operations are performed by the interrupt prediction circuitry 2032 which may comprise hard-wired circuitry to perform these operations and/or which may include a microcontroller which executes firmware or software to perform these operations. In any case, the update PNI value itself or a wake command is provided to the power management circuitry 2020 so that it can cause the I/O device 2070 to wake at the appropriate time to ensure proper operation. In some implementations, the power management circuitry 2020 may perform the described operations (e.g., the interrupt tracker 2030 and interrupt prediction logic 2032 may be a sub-block of the power management circuitry 2020).

As mentioned, an average error threshold (AET) may be determined for each entry in the interrupt tracker 2030, which indicates a level of confidence that the corresponding interrupts (identified by an interrupt vector) are periodic. In some implementations, a bit may be set in entries corresponding to periodic interrupts, which enables pre-waking of the processor/core 2010.

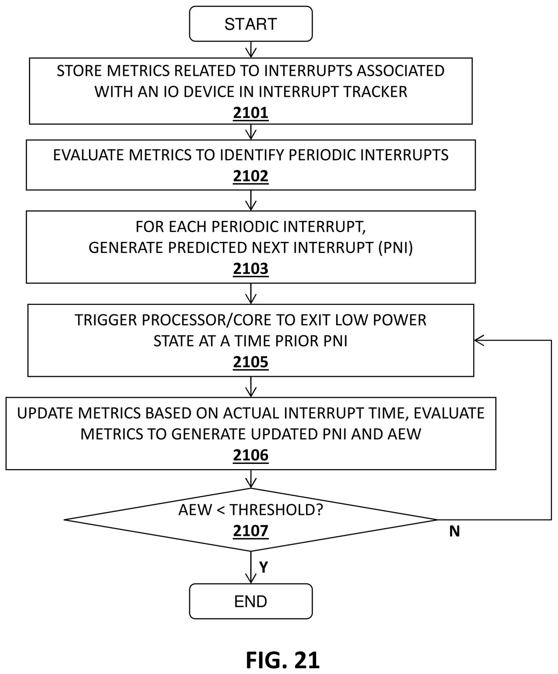

A method in accordance with some embodiments is illustrated in **FIG. 21.** The method may be implemented on the various architectures described herein but is not limited to any particular processor or system architecture.

At 2101, metrics are stored in an interrupt tracker related to interrupts associated with an I/O device. At 2102, the metrics are evaluated to identify periodic interrupts.

At 2103, for each periodic interrupt, a predicted next interrupt (PNI) is generated. As mentioned, in some embodiments, the PNI value may be determined as:

$$(PNI - PNI/MAW) + TBI/MAW$$

At 2105, the processor/core is triggered to exit a low power state at a time prior to the predicted next interrupt (PNI) time (e.g., such that the processor/core will be in an active state when the interrupt arrives). As mentioned, this may be done via communication with the power management subsystem (or may be integral to the power management subsystem) of the processor/core.

At 2106, the metrics are updated based on the actual interrupt time observed. The metrics are also evaluated to generate updated PNI and AEW values. If the new AEW value is above a specified threshold, then the interrupt is considered non-periodic and the process ends. If the new AEW value is less than (or equal to) the specified threshold, then the process returns to 2105 where the processor/core is triggered to exit the low power state at a time prior to the new PNI value.

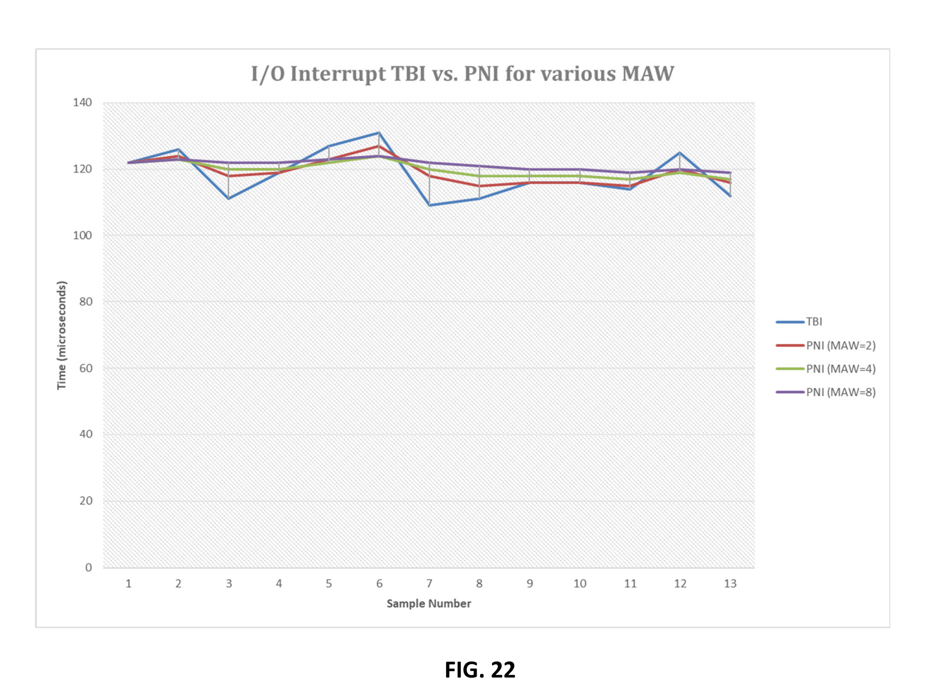

An example profile of a theoretical isochronous I/O device (e.g., such as a USB device) is illustrated in **FIG. 22.** It can be seen that the PNI quickly converges on a low-error estimation of the TBI given the periodic nature of the interrupt triggers.

**Changes in Interrupt Periodicity**

The embodiments described herein rely on historical data to predict future interrupts, and sudden changes in workload or interarrival rates can therefore impact accuracy. To mitigate this, the average error threshold (AET) is determined periodically and the use of predictions is disabled when AET rises above a threshold. This allows the system to quickly adjust to changes in interrupt patterns and maintain optimal performance. Note also that OS and driver hints can be used to augment the accuracy further.

**Tuning and Optimization**

In some embodiments, the tuning parameters described herein may be augmented by I/O device indications, OS schedules, and/or driver events. In other words, an I/O device, OS, and/or driver may override the next interrupt timing with an exact value, allowing the embodiments of the invention to either adaptively discover the interrupt rate at runtime or have it prescriptively set by the controlling software (i.e., the operating system) or hardware entities (i.e., the device and its driver stack).

The embodiments of the invention increase power efficiency by exploiting the downtime between periodic interrupts to place the cores and the interrupt path to the cores in a higher-latency, lower-power state.

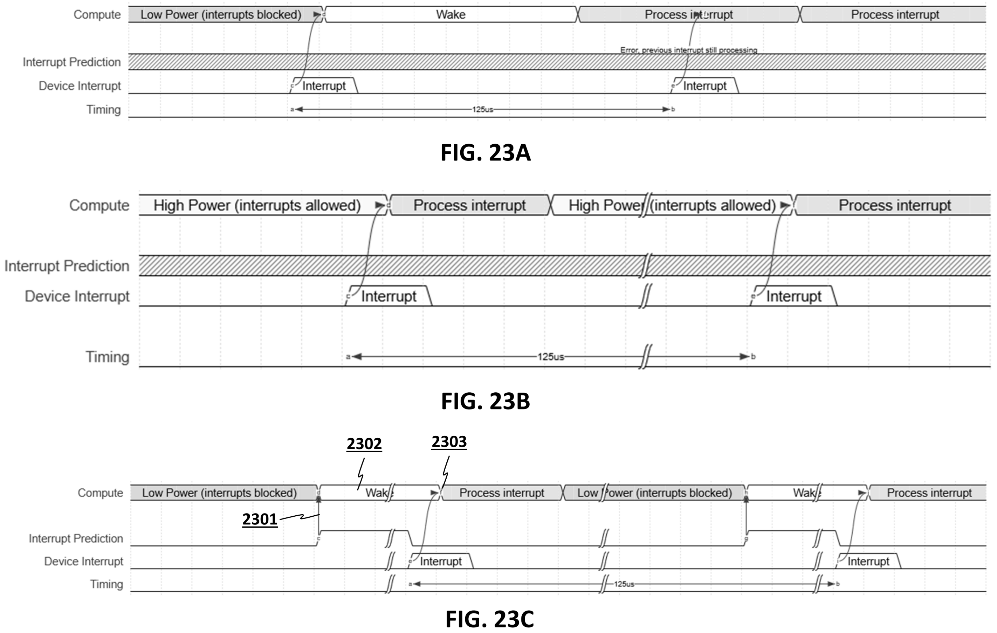

Using the real-life case of a USB device with a 125us interrupt interval to the compute cluster. With no prediction mechanism in place, low power entry is not possible as the interrupt cannot be processed within the 125us window due to the latency incurred by the wake from a low power state. **FIG. 23A** illustrates an example waveform showing that, in response to an interrupt, the compute cluster takes considerable time to exit from the low power state and process the interrupt.

It is of course permissible to keep the compute cluster in a high-power state, resulting in immediate processing of the interrupt. but this results in poor power efficiency as the compute cluster remains in a high-power state for an extended period of time, as indicated in **FIG. 23B.**

By predicting the arrival of the interrupt, the path to the compute cluster for processing can be pre-activated, causing the computer cluster to exit the low power state so that it will be in an active state at the time the interrupt arrives. As indicated in **FIG. 23C,** an interrupt prediction signal 2301 is generated to cause the compute cluster to wake 2302 before the interrupt arrives at 2303.

The embodiments of the invention described herein create an autonomous system for predicting periodic interrupts and, in cases where sufficient accuracy can be obtained, improving the power efficiency of the SoC by pre-waking the path for the interrupt to be processed. These embodiments can be further enhanced using OS or software hints in addition to a more complete hardware implementation.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

EXAMPLES

The following are example implementations of different embodiments of the invention

Example 1. A processor comprising: compute circuitry to execute instructions; interrupt management circuitry coupled to or integral to the compute circuitry, the interrupt management circuitry to store and evaluate metrics related to interrupts associated with an input-output (IO) device to identify periodic interrupts and, for each periodic interrupt, to generate a time for a predicted next interrupt; and power management circuitry to initiate waking the compute circuitry from a low power state prior to the time for the predicted next interrupt to allow the compute circuitry to be in an active state when the predicted next interrupt is received.

Example 2. The processor of example 1, wherein the power management circuitry is to initiate the waking of the compute circuitry based on the time for the predicted next interrupt and further based on an amount of time required for the compute circuitry to transition from the low power state to an active state.

Example 3. The processor of examples 1 or 2, wherein the metrics related to interrupts associated with an I/O device include a time of a most recent interrupt (MRI), a moving average window (MAW), and a time between interrupts (TBI).

Example 4. The processor of any of examples 1- 3, wherein the interrupt management circuitry is to generate an average error in window (AEW) value based on the moving average window (MAW), the PNI, and the TBI.

Example 5. The processor of any of examples 1-4, wherein the interrupt management circuitry is to disable waking the compute circuitry prior to the PNI when the AEW value is greater than an average error threshold (AET) value.

Example 6. The processor of any of examples 1-5, wherein the interrupt management circuitry comprises a tracker table to store the metrics related to interrupts, a plurality of entries to be stored in the tracker table, each entry corresponding to a particular interrupt vector.

Example 7. The processor of any of examples 1-6, wherein each time the interrupt vector is triggered based on a current interrupt, the interrupt management circuitry adjusts a corresponding time for a predicted next interrupt (PNI) by the time between the current interrupt and a previous interrupt.

Example 8. A method, comprising: storing metrics related to interrupts associated with an input-output (IO) device coupled to compute circuitry; evaluating the metrics to identify periodic interrupts; generating a time for a predicted next interrupt for each periodic interrupt; and initiate waking the compute circuitry from a low power state prior to the time for the predicted next interrupt to allow the compute circuitry to be in an active state when the predicted next interrupt is received.

Example 9. The method of example 8, the waking of the compute circuitry is to be initiated based on the time for the predicted next interrupt and further based on an amount of time required for the compute circuitry to transition from the low power state to an active state.

Example 10. The method of examples 8 or 9, wherein the metrics related to interrupts associated with an I/O device include a time of a most recent interrupt (MRI), a moving average window (MAW), and a time between interrupts (TBI).

Example 11. The method of any of examples 8-10, further comprising: generating an average error in window (AEW) value based on the moving average window (MAW), the PNI, and the TBI.

Example 12. The method of any of examples 8-11, further comprising: disabling the waking of the compute circuitry prior to the PNI when the AEW value is greater than an average error threshold (AET) value.

Example 13. The method of any of examples 8-12, wherein storing metrics related to interrupts comprises storing the metrics in a plurality of entries of a tracker table, each entry corresponding to a particular interrupt vector.

Example 14. The method of any of examples 8-13, further comprising: adjusting a corresponding time for a predicted next interrupt (PNI) by the time between the current interrupt and a previous interrupt each time the interrupt vector is triggered based on a current interrupt.

Example 15. A machine-readable medium having program code stored thereon which, when executed by a machine, causes the machine to perform operations, comprising: storing metrics related to interrupts associated with an input-output (IO) device coupled to compute circuitry; evaluating the metrics to identify periodic interrupts; generating a time for a predicted next interrupt for each periodic interrupt; and initiate waking the compute circuitry from a low power state prior to the time for the predicted next interrupt to allow the compute circuitry to be in an active state when the predicted next interrupt is received.

Example 16. The machine-readable medium of example 15, the waking of the compute circuitry is to be initiated based on the time for the predicted next interrupt and further based on an amount of time required for the compute circuitry to transition from the low power state to an active state.

Example 17. The machine-readable medium of examples 15 or 16, wherein the metrics related to interrupts associated with an I/O device include a time of a most recent interrupt (MRI), a moving average window (MAW), and a time between interrupts (TBI).

Example 18. The machine-readable medium of any of examples 15-17, further comprising program code to cause the machine to perform the operations of: generating an average error in window (AEW) value based on the moving average window (MAW), the PNI, and the TBI.

Example 19. The machine-readable medium of any of examples 15-18, further comprising program code to cause the machine to perform the operations of: disabling the waking of the compute circuitry prior to the PNI when the AEW value is greater than an average error threshold (AET) value.

Example 20. The machine-readable medium of any of examples 15-19, wherein storing metrics related to interrupts comprises storing the metrics in a plurality of entries of a tracker table, each entry corresponding to a particular interrupt vector.

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

**Claims**

1. A processor comprising:

   compute circuitry to execute instructions;
   interrupt management circuitry coupled to or integral to the compute circuitry, the interrupt management circuitry to store and evaluate metrics related to interrupts associated with an input-output (IO) device to identify periodic interrupts and, for each periodic interrupt, to generate a time for a predicted next interrupt (PNI); and
   power management circuitry to initiate waking the compute circuitry from a low power state prior to the time for the predicted next interrupt to allow the compute circuitry to be in an active state when the predicted next interrupt is received.

2. The processor of claim 1, wherein the power management circuitry is to initiate the waking of the compute circuitry based on the time for the predicted next interrupt and further based on an amount of time required for the compute circuitry to transition from the low power state to the active state.

3. The processor of claim 1 or 2, wherein the metrics related to interrupts associated with an I/O device include a time of a most recent interrupt (MRI), a moving average window (MAW), and a time between interrupts (TBI).

4. The processor of claim 3, wherein the interrupt management circuitry is to generate an average error in window (AEW) value based on the MAW, the PNI, and the TBI.

5. The processor of claim 4, wherein the interrupt management circuitry is to disable waking the compute circuitry prior to the PNI when the AEW value is greater than an average error threshold (AET) value.

6. The processor of any of claims 1 to 5, wherein the interrupt management circuitry comprises a tracker table to store the metrics related to interrupts, a plurality of entries to be stored in the tracker table, each entry corresponding to a particular interrupt vector.

7. The processor of claim 6, wherein each time the interrupt vector is triggered based on a current interrupt, the interrupt management circuitry adjusts a corresponding time for a predicted next interrupt (PNI) by the time between the current interrupt and a previous interrupt.

8. A method, comprising:

   storing metrics related to interrupts associated with an input-output (IO) device coupled to compute circuitry;
   evaluating the metrics to identify periodic interrupts;
   generating a time for a predicted next interrupt (PNI) for each periodic interrupt; and
   initiate waking the compute circuitry from a low power state prior to the time for the predicted next interrupt to allow the compute circuitry to be in an active state when the predicted next interrupt is received.

9. The method of claim 8, the waking of the compute circuitry is to be initiated based on the time for the predicted next interrupt and further based on an amount of time required for the compute circuitry to transition from the low power state to the active state.

10. The method of claim 8 or 9, wherein the metrics related to interrupts associated with an I/O device include a time of a most recent interrupt (MRI), a moving average window (MAW), and a time between interrupts (TBI).

11. The method of claim 10, further comprising:
    generating an average error in window (AEW) value based on the MAW, the PNI, and the TBI.

12. The method of claim 11, further comprising:
    disabling the waking of the compute circuitry prior to the PNI when the AEW value is greater than an average error

**EP 4 769 071 A1**

threshold (AET) value.

13. The method of any of claims 8 to 12, wherein storing metrics related to interrupts comprises storing the metrics in a plurality of entries of a tracker table, each entry corresponding to a particular interrupt vector.

14. The method of claim 13, further comprising:
adjusting a corresponding time for a predicted next interrupt (PNI) by the time between the current interrupt and a previous interrupt each time the interrupt vector is triggered based on a current interrupt.

15. A machine-readable medium having program code stored thereon which, when executed by a machine, causes the machine to perform operations implementing a method of any one of claims 8 to 14.

**22**

FIG. 1

EP 4 769 071 A1

EP 4 769 071 A1

PROCESSOR 200

| SPECIAL PURPOSE LOGIC 208 | CORE 202A<br><br>CACHE UNIT(S) 204A | ... | CORE 202N<br><br>CACHE UNIT(S) 204N | SYSTEM AGENT UNIT 210<br><br>INTEGRATED MEMORY CONTROLLER UNIT(S) 214 | INTERCONNECT CONTROLLER UNIT(S) 216 |

SHARED CACHE UNIT(S) 206

INTERCONNECT NETWORK 212

**FIG. 2**

PIPELINE 300

| FETCH 302 | LENGTH DECODING 304 | DECODE 306 | ALLOC. 308 | RENAMING 310 | SCHEDULE 312 | REGISTER READ/ MEMORY READ 314 | EXECUTE STAGE 316 | WRITE BACK/ MEMORY WRITE 318 | EXCEPTION HANDLING 322 | COMMIT 324 |

**FIG. 3(A)**

**FIG. 3(B)**

EXECUTION UNIT(S) CIRCUITRY
`BPC62

ALU 401

VECTOR/SIMD 403

LOAD/STORE 405

BRANCH/JUMP 407

FPU 409

**FIG. 4**

REGISTER ARCHITECTURE
500

SEGMENT REGISTERS 520

MACHINE SPECIFIC REGISTERS 535

WRITEMASK/PREDICATE REGISTERS 515

INSTRUCTION POINTER REGISTER(S) 530

SCALAR FP REGISTER FILE 545

VECTOR/SIMD REGISTERS 510

CONTROL REGISTER(S) 555

DEBUG REGISTERS 550

GENERAL PURPOSE REGISTERS 525

MEM. MANAGEMENT REGISTERS 565

FLAG REGISTER(S) 540

MACHINE CHECK REGISTERS 560

FIG. 5

EP 4 769 071 A1

| PREFIX(ES) 601 | OPCODE 603 | ADDRESSING 605 | DISPLACEMENT 607 | IMMEDIATE 609 |

**FIG. 6**

ADDRESSING
605

MOD R/M BYTE 702

| 7 | 6 5 | 3 2 | 0 |
|---|---|---|---|
| MOD 742 | REG 744 | R/M 746 | |

SIB BYTE 704

| 7 | 6 5 | 3 2 | 0 |
|---|---|---|---|
| SCALE ss 752 | INDEX xxx 754 | BASE bbb 756 | |

MOD R/M | SIB

FIG. 7

EP 4 769 071 A1

PREFIX 601(A)

| 7 | 6 | 5 | 4 | 3 | 2 | 1 | 0 |
|---|---|---|---|---|---|---|---|
| 0 | 1 | 0 | 0 | W | R | X | B |

**FIG. 8**

PREFIX 601(A) | OPCODE 603 | MOD R/M 702

| MOD 742 | REG 744 | R/M 746 |
|---------|---------|---------|
| !=11 | rrr | bbb |

→ Rrrr → Bbbb

**FIG. 9(A)**

PREFIX 601(A) | OPCODE 603 | MOD R/M 702

| MOD 742 | REG 744 | R/M 746 |
|---------|---------|---------|
| 11 | rrr | bbb |

→ Rrrr → Bbbb

**FIG. 9(B)**

PREFIX 601(A) | OPCODE 603 | MOD R/M 702 | SIB 704

| MOD 742 | REG 744 | R/M 746 |
|---------|---------|---------|
| !=11 | rrr | 100 |

| SCL 752 | INDEX 754 | BASE 756 |
|---------|-----------|----------|
| | xxx | bbb |

→ Rrrr → Xxxx → Bbbb

**FIG. 9(C)**

PREFIX 601(A) | OPCODE 603 | MOD R/M 702

| REG 744 |
|---------|
| bbb |

→ Bbbb

**FIG. 9(D)**

SECOND PREFIX 601(B)

| 7 | | | | | 0 | 7 | 6 | 5 | 4 | 3 | 2 | 1 | 0 |
|---|---|---|---|---|---|---|---|---|---|---|---|---|---|
| | | FORMAT 1001 | | | | R | v | v | v | v | L | p | p |

BYTE 0 1003

BYTE 1 1005

**FIG. 10(A)**

SECOND PREFIX 601(B)

| 7 | | | | | 0 | 7 | 6 | 5 | 4 | 3 | 2 | 1 | 0 | 7 | 6 | 5 | 4 | 3 | 2 | 1 | 0 |
|---|---|---|---|---|---|---|---|---|---|---|---|---|---|---|---|---|---|---|---|---|---|
| | | FORMAT 1011 | | | | R | X | B | m | m | m | m | m | W | v | v | v | v | L | p | p |

BYTE 0 1013

BYTE 1 1015

BYTE 2 1017

**FIG. 10(B)**

PREFIX 601(C)

| FORMAT 1111 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| | z | L' | L | b | V' | a | a | a | W | v | v | v | v | 1 | p | p | R | X | B | R' | 0 | 0 | m | m |

PAYLOAD BYTE 2
1115

PAYLOAD BYTE 1
1117

PAYLOAD BYTE 0
1119

FIG. 11

PROCESSOR WITHOUT A FIRST ISA INSTRUCTION SET CORE 1214

PROCESSOR WITH AT LEAST ONE FIRST ISA INSTRUCTION SET CORE 1216

HARDWARE

SOFTWARE

ALTERNATIVE ISA BINARY CODE 1210

INSTRUCTION CONVERTER 1212

FIRST ISA BINARY CODE 1206

ALTERNATIVE INSTRUCTION SET COMPILER 1208

FIRST ISA COMPILER 1204

HIGH LEVEL LANGUAGE 1202

FIG. 12

EP 4 769 071 A1

34

PROCESSOR/CORE 1381 — LOCAL APIC 1391
PROCESSOR/CORE 1382 — LOCAL APIC 1392
PROCESSOR/CORE 1383 — LOCAL APIC 1393
PROCESSOR/CORE 1384 — LOCAL APIC 1394

APIC BUS 1398

I/O APIC 1316

EXTERNAL INTERRUPTS

FIG. 13A

FIG. 13B

CR4 **1404**

NMI SOURCE
DELIVERY BIT (23)
**1401**

31(63)   23  22  21  20      18  17  16  15  14  13  12  11  10  9   8   7   6   5   4   3   2   1   0

| Reserved | N S D | P K E | S M A P | S M E P | | | | | | S M X E | V M X E | | U M I P | | | P C E | P G E | M C E | P A E | P S E | D E | T S D | P V I | V M E | CR4 |

FSGSBASE

OSXSAVE          PCIDE          OSXMMEXCPT

OSFXSR

SET(1)/
UNSET(0)

NMI PROCESSING
MODE SELECTION
**1400**

OS/VMM
**1370**

**FIG. 14**

FIG. 15

ICR **1340**

| 63 | 56 | 55 | | 32 |
| --- | --- | --- | --- | --- |
| Destination Field | | DESTINATION FIELD **1601** | | |

| 31 | 20 19 18 17 16 15 14 13 12 11 10 | 8 7 | 0 |
| --- | --- | --- | --- |
| RESERVED | | 100 | NSI **1341** |

VECTOR FIELD UPDATES **1542**

NMI SOURCE DECODER **1545**

NMI SOURCE **1390**

**DESTINATION SHORTHAND**
00: No Shorthand
01: Self
10: All Including Self
11: All Excluding Self

Reserved

**Delivery Mode**
000: Fixed
001: Lowest Priority[1]
010: SMI
011: Reserved
100: NMI
101: INIT
110: Start Up
111: Reserved

**DESTINATION MODE**
0: Physical
1: Logical

**Delivery Status**
0: Idle
1: Send Pending

**LEVEL**
0 = De-assert
1 = Assert

**TRIGGER MODE**
0: Edge
1: Level

Address: FEE0 0300H (0 - 31)
FEE0 0310H (32 - 63)
Value after Reset: 0H

**FIG. 16**

FIG. 17

IRTE 1701

SID
SQ
SVT
Reserved (0)

P
FPD
Destination Mode
Redirection Hint
Trigger Mode
Delivery Mode
AVAIL
Reserved (0)
0
Vector
Reserved (0)
Destination ID

NSI
1741

100

OS/VMM
1370

EP 4 769 071 A1

POSTED INTERNET DESCRIPTOR 1801

OS/VMM 1370

ON
SN
Reserved (0)
NV
Reserved (0)
NDST
Reserved (0)

1805
1806
NSI 1841
1807

100

PIR

FIG. 18

41

```
                          ┌─────────────┐
                          │    START    │
                          └──────┬──────┘
                                 │
        ┌────────────────────────▼────────────────────────┐
───────►│  REGISTER NMI HANDLER, INDICATING NON-           │◄────────────┐
│       │  MASKABLE INTERRUPT (NMI) SOURCE INFORMATION     │             │
│       │                     1901                         │             │
│       └────────────────────────┬────────────────────────┘             │
│                                 │                                      │
│              ┌──────────────────▼──────────────────┐                   │
│              │            RECEIVE NMI               │                   │
│              │              1902                    │                   │
│              └──────────────────┬──────────────────┘                   │
│                                 │                                      │
│              ┌──────────────────▼──────────────────┐                   │
│              │  READ CONTROL REGISTER TO DETERMINE  │                   │
│              │  IF NMI SOURCE DELIVERY IS ENABLED   │                   │
│              │              1903                    │                   │
│              └──────────────────┬──────────────────┘                   │
│                                 │                                      │
│                          ◇──────▼──────◇                              │
│                         ╱   NMI          ╲            N                │
│                        ╱ SOURCE DELIVERY   ╲──────────────┐            │
│                        ╲   ENABLED?        ╱              │            │
│                         ╲     1904        ╱               │            │
│                          ◇──────┬──────◇                 │            │
│                                 │ Y                       │            │
│   ┌─────────────────────────────▼──────┐  ┌──────────────▼──────────┐ │
│   │ STORE DATA RELATED TO NMI IN ONE OR │  │ STORE DATA RELATED TO   │ │
│   │ MORE DATA FIELDS IN LOCAL APIC      │  │ NMI IN ONE OR MORE DATA │ │
│   │ CIRCUITRY REGISTERS; STORE NMI      │  │ FIELDS IN LOCAL APIC    │ │
│   │ SOURCE INFORMATION IN INTERRUPT     │  │ CIRCUITRY REGISTERS,    │ │
│   │ VECTOR FIELDS OF THE REGISTER(S)    │  │ EXCLUDING NMI SOURCE    │ │
│   │              1905                   │  │ INFORMATION             │ │
│   └─────────────────────────────┬──────┘  │          1907           │ │
│                                 │         └──────────────┬──────────┘ │
│   ┌─────────────────────────────▼──────┐  ┌──────────────▼──────────┐ │
│   │ DELIVER NMI TO DESTINATION          │  │ DELIVER NMI TO          │ │
│   │ WITH NMI SOURCE INFORMATION         │  │ DESTINATION WITHOUT NMI │ │
│   │              1906                   │  │ SOURCE INFORMATION      │ │
│   └─────────────────────────────┬──────┘  │          1908           │ │
│                                 │         └──────────────┬──────────┘ │
└─────────────────────────────────┘                        └───────────┘
```

**FIG. 19**

FIG. 20

```
                              ┌─────────────┐
                              │    START    │
                              └──────┬──────┘
                                     ▼
        ┌────────────────────────────────────────────────────┐
        │  STORE METRICS RELATED TO INTERRUPTS ASSOCIATED     │
        │    WITH AN IO DEVICE IN INTERRUPT TRACKER           │
        │                     2101                            │
        └──────────────────────┬─────────────────────────────┘
                               ▼
        ┌────────────────────────────────────────────────────┐
        │  EVALUATE METRICS TO IDENTIFY PERIODIC INTERRUPTS   │
        │                     2102                            │
        └──────────────────────┬─────────────────────────────┘
                               ▼
        ┌────────────────────────────────────────────────────┐
        │            FOR EACH PERIODIC INTERRUPT,             │
        │     GENERATE PREDICTED NEXT INTERRUPT (PNI)         │
        │                     2103                            │
        └──────────────────────┬─────────────────────────────┘
                               ▼
        ┌────────────────────────────────────────────────────┐
        │     TRIGGER PROCESSOR/CORE TO EXIT LOW POWER        │
        │          STATE AT A TIME PRIOR PNI                  │◄──┐
        │                     2105                            │   │
        └──────────────────────┬─────────────────────────────┘   │
                               ▼                                  │
        ┌────────────────────────────────────────────────────┐   │
        │ UPDATE METRICS BASED ON ACTUAL INTERRUPT TIME,      │   │
        │   EVALUATE METRICS TO GENERATE UPDATED PNI AND AEW  │   │
        │                     2106                            │   │
        └──────────────────────┬─────────────────────────────┘   │
                               ▼                                  │
                        ╱─────────────╲                           │
                       ╱  AEW <        ╲        N                 │
                       ╲  THRESHOLD?    ╱──────────────────────────┘
                        ╲    2107      ╱
                         ╲────────────╱
                               │ Y
                               ▼
                        ┌─────────────┐
                        │     END     │
                        └─────────────┘
```

**FIG. 21**

**FIG. 22**

**FIG. 23A**

**FIG. 23B**

**FIG. 23C**

EP 4 769 071 A1

Europäisches
Patentamt

European
Patent Office

Office européen
des brevets

# EUROPEAN SEARCH REPORT

**Application Number**

EP 25 21 5227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/247916 A1 (JUNG KIBEEN [KR] ET AL) 12 August 2021 (2021-08-12) | 1-4, 6-11, 13-15 | INV. G06F1/3206 G06F1/3234 |
| A | * paragraphs [0024] - [0104]; figures 1-12 * ----- | 5,12 | |
| A | WO 2014/186294 A1 (ADVANCED MICRO DEVICES INC [US]) 20 November 2014 (2014-11-20) * paragraph [0017] * * paragraphs [0029] - [0033] * * paragraph [0048] * * figures 1-3 * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 28 April 2026 | de Biolley, Luc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 5227

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2026

| Patent document cited in search report | Publication date | Patent family member(s) | Publication date |
|---|---|---|---|
| US 2021247916 A1 | 12-08-2021 | CN 113254361 A<br>EP 3862843 A1<br>KR 20210101632 A<br>US 2021247916 A1 | 13-08-2021<br>11-08-2021<br>19-08-2021<br>12-08-2021 |
| WO 2014186294 A1 | 20-11-2014 | US 2014344599 A1<br>WO 2014186294 A1 | 20-11-2014<br>20-11-2014 |

EPO FORM P0459

For more details about this annex : see Official Journal of the European Patent Office, No. 12/82